(19) Europäisches Patentamt

European Patent Office

Office européen des brevets

(11) **EP 1 348 079 B1**

(12) **FASCICULE DE BREVET EUROPEEN**

(45) Date de publication et mention
de la délivrance du brevet:
**16.08.2006 Bulletin 2006/33**

(21) Numéro de dépôt: **01999757.6**

(22) Date de dépôt: **06.12.2001**

(51) Int Cl.:
**F16B 5/04** (2006.01)

(86) Numéro de dépôt international:
**PCT/FR2001/003854**

(87) Numéro de publication internationale:
**WO 2002/046625 (13.06.2002 Gazette 2002/24)**

(54) **PROCEDE D'ASSEMBLAGE OPTIMISE DE DEUX PIECES SENSIBLEMENT PLANES**

OPTIMIERTER VERBINDUNGSPROZESS FÜR DAS VERBINDEN ZWEIER IM WESENTLICHENPLANEN OBJEKTE

OPTIMISED METHOD FOR ASSEMBLING TWO SUBSTANTIALLY PLANAR PARTS

(84) Etats contractants désignés:
**AT BE CH CY DE DK ES FI FR GB GR IE IT LI LU MC NL PT SE TR**

(30) Priorité: **08.12.2000 FR 0015982**

(43) Date de publication de la demande:
**01.10.2003 Bulletin 2003/40**

(73) Titulaire: **AIRBUS France**
**31060 Toulouse Cedex 03 (FR)**

(72) Inventeurs:
• **KOFFI, Konan**
**06 ABIDJAN (CI)**
• **HUET, Jacques**
**F-31600 MURET (FR)**

• **BOUCHET, Eric**
**F-31840 AUSSONNE (FR)**

(74) Mandataire: **Poulin, Gérard et al**
**BREVALEX**
**3, rue du Docteur Lancereaux**
**75008 Paris (FR)**

(56) Documents cités:
**DE-A- 4 234 038**       **DE-A- 19 702 518**
**US-A- 4 579 475**       **US-A- 6 105 902**

• **C.-S. CHEN: "A methodology for fatigue crack growth and residual strength prediction with applications to aircraft fuselages" COMPUTATIONAL MECHANICS, vol. 19, 1997, pages 527-532, XP002174913**

## Description

### Domaine technique

L'invention concerne un procédé d'assemblage de deux pièces planes ou sensiblement planes, telles que des plaques ou des éléments de pièces profilées, au moyen d'organes de fixation de type boulons, rivets, etc..

De façon plus précise, l'invention se rapporte à l'assemblage optimisé de deux pièces conçues pour supporter et transmettre des efforts prédéterminés, uniformes ou variables dans le temps, qui peuvent être différents d'un assemblage à un autre.

Le procédé selon l'invention s'applique à tous les assemblages de pièces sensiblement planes, qu'elles soient métalliques ou en matériaux composites, mettant en oeuvre des organes de fixation tels que des rivets ou des boulons. Il trouve une utilisation particulièrement avantageuse dans le domaine aéronautique, où ce type d'assemblage est très utilisé.

### Etat de la technique

Dans un aéronef, l'assemblage boulonné ou riveté constitue le mode d'assemblage le plus utilisé. Ainsi, un avion de transport de passagers ou de fret comporte plus d'un million de rivets et près de 300 000 boulons.

Dans les assemblages de ce type, les organes de fixation remplissent à la fois les fonctions de transfert d'efforts, d'étanchéité et de transmission des courants d'électricité statique et de foudre.

La conception des assemblages par boulons et par rivets est donc vitale pour les performances de l'ensemble de la structure d'un aéronef. En effet, une mauvaise conception entraînerait une durée de vie limitée et des excédents de masse.

Dans l'état actuel de la technique, le positionnement des rivets et des boulons est effectué selon des habitudes propres à chaque constructeur d'aéronef, sans faire véritablement appel à une méthodologie particulière.

Le brevet US-A-6 105 902 décrit un procédé de fabrication de fuselage d'aéronef, par assemblage bord à bord de panneaux extrudés intégrant des nervures de renfort. Plus précisément, les bords adjacents des panneaux sont fixés sur des longerons extrudés, à sections en forme de T, par des paires de rivets ou d'organes de fixation analogues alignés perpendiculairement aux bords des panneaux.

Le brevet US-A-4 579 475 décrit l'assemblage bout à bout de deux pièces en matériau composite formant, par exemple, le revêtement d'un aéronef. Les deux pièces présentent une même épaisseur dans la région de l'assemblage. Elles sont reliées par une éclisse dont l'épaisseur décroît en s'éloignant de la ligne de joint. Plusieurs rangées de boulons traversent les pièces et l'éclisse, parallèlement à la ligne de joint, à différentes distances de celle-ci.

### Exposé de l'invention

L'invention a précisément pour objet un procédé d'assemblage de deux pièces sensiblement planes, métalliques ou en matériaux composites, visant à optimiser le positionnement des organes de fixation utilisés pour réaliser cet assemblage, afin de garantir une durée de vie maîtrisée et optimale.

Conformément à l'invention, ce résultat est obtenu au moyen d'un procédé d'assemblage de deux pièces sensiblement planes au moyen d'au moins une ligne extrême d'organes de fixation, destinés à transmettre entre lesdites pièces des efforts déterminés, orientés dans le plan des pièces, caractérisé en ce qu'il consiste à calculer un rapport R entre les contraintes de traction $\alpha_T$ et de flexion $\alpha_F$ correspondant auxdits efforts et à orienter ladite ligne extrême d'organes de fixation selon un angle $\alpha$ par rapport à la direction de la fibre neutre desdites pièces, la valeur absolue dudit angle $\alpha$ étant telle que : $10,8 \ln(R) + 16 < |\alpha| < 13,9 \ln(R) + 28$, lorsque le rapport R est au moins égal à 1, et telle que $16 < |\alpha| < 28$ lorsque le rapport R est inférieur à 1, la valeur absolue de l'angle $\alpha$ étant au plus égale à 90°.

Le demandeur a établi, par des simulations numériques étayées par des essais, que la réalisation de la première ligne d'organes de fixation selon une orientation $\alpha$ respectant la fourchette de valeurs définies ci-dessus permettait de répartir au mieux les contraintes supportées par chacun desdits organes et, par conséquent, d'augmenter la durée de vie en fatigue et la tenue statique des assemblages.

Dans un mode de réalisation préféré de l'invention, on oriente la ligne extrême d'organes de fixation selon un angle $\alpha$ sensiblement égal, en valeur absolue, à $11,6 \ln(R) + 21$ lorsque le rapport R est au moins égal à 1 et sensiblement égal à 20° lorsque le rapport R est inférieur à 1.

Dans le cas où les efforts à transmettre sont des efforts alternés, on oriente avantageusement la ligne extrême d'organes de fixation selon l'angle $\alpha$ précité et selon un angle $-\alpha$, de part et d'autre de la fibre neutre des pièces. L'organe de fixation le plus en avant est alors sur la fibre neutre.

Le procédé d'assemblage selon l'invention peut être utilisé aussi bien lorsque les pièces sont assemblées directement l'une à l'autre que lorsqu'elles sont assemblées par l'intermédiaire d'une ou de deux éclisses.

Dans le premier cas, les deux pièces sont assemblées directement l'une à l'autre par au moins deux lignes extrêmes d'organes de fixation orientées selon l'angle $\alpha$.

Dans le deuxième cas, c'est-à-dire lorsque les deux pièces sont assemblées l'une à l'autre par l'intermédiaire d'une éclisse, chacune des pièces est fixée à l'éclisse par au moins deux lignes extrêmes d'organes de fixation. Avantageusement, ces lignes extrêmes sont alors orientées selon l'angle α. En variante, au moins les lignes extrêmes les plus éloignées de l'autre pièce sont orientées selon l'angle α.

Dans le troisième cas, c'est-à-dire lorsque les deux pièces sont assemblées l'une à l'autre par l'intermédiaire de deux éclisses, chacune des pièces est fixée aux deux éclisses par au moins deux lignes extrêmes d'organes de fixation, parmi lesquelles au moins la ligne extrême la plus éloignée de l'autre pièce est orientée selon l'angle α.

L'invention s'applique aussi bien à des pièces présentant une épaisseur sensiblement constante dans la zone de l'assemblage qu'à des pièces dont l'épaisseur diminue en allant vers leurs extrémités, dans la zone précitée.

**Brève description des dessins**

On décrira à présent, à titre d'exemples non limitatifs, différents modes de réalisation de l'invention, en se référant aux dessins annexés, dans lesquels :

- la figure 1 est une vue de dessus représentant schématiquement un assemblage par rivets ou boulons mettant en oeuvre le procédé selon l'invention ;
- la figure 2 est une courbe qui représente l'évolution de l'angle α, formé par la première ligne de rivets ou de boulons avec la fibre neutre des pièces, en fonction du rapport R entre la contrainte de traction $\sigma_T$ et la contrainte de flexion $\sigma_F$, conformément à l'invention ;
- les figures 3A à 3D sont des vues en perspective qui illustrent différentes applications de l'invention à des assemblages sans éclisse, à une éclisse et à deux éclisses, respectivement; et
- la figure 4 est une vue de dessus comparable à la figure 1, qui illustre le cas particulier où les efforts appliqués sur l'assemblage sont des efforts alternés.

**Description détaillée de modes de réalisation préférés de l'invention**

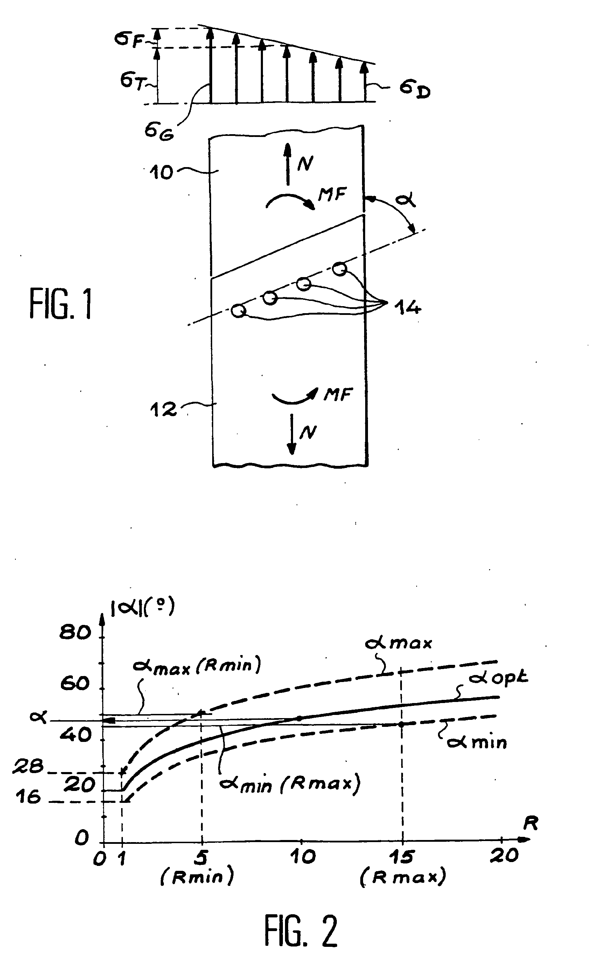

Comme on l'a représenté schématiquement sur la figure 1, l'invention concerne l'assemblage de deux pièces 10, 12 au moyen d'une pluralité d'organes de fixation 14, généralement constitués par des rivets ou des boulons. Les deux pièces 10 et 12 ainsi assemblées peuvent être constituées par des pièces quelconques sensiblement planes. L'expression « pièces sensiblement planes » désigne ici, comme dans l'ensemble du texte, des pièces telles que des plaques ou des éléments de pièces profilées ayant une géométrie plane ou proche d'un plan.

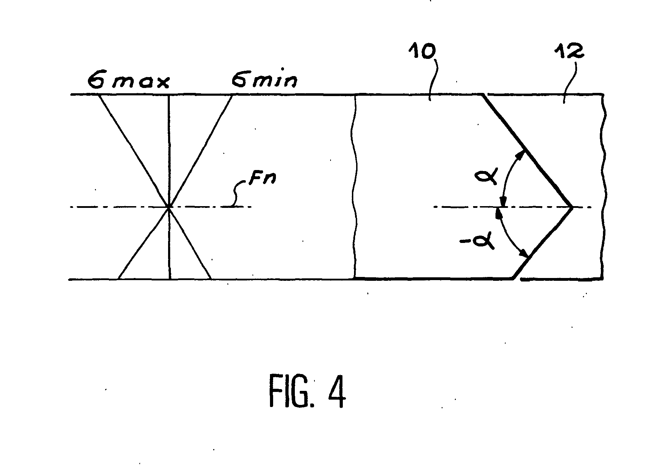

Le procédé selon l'invention concerne l'assemblage de pièces 10 et 12 prévues pour être soumises, dans leur plan, à des efforts ou à des charges prédéterminés lors de leur utilisation ultérieure. Ces efforts peuvent être de différentes natures selon l'application concernée. En particulier, les efforts appliqués sur les pièces peuvent être ondulés et toujours de même sens ou alternés (c'est-à-dire alternativement dans un sens, puis dans l'autre). Le cas particulier des efforts alternés sera traité ultérieurement en référence à la figure 4.

Quels que soient les efforts qui sont appliqués sur les pièces on peut déterminer, dans chaque cas, une contrainte de traction $\sigma_T$ correspondant à l'effort de traction N (figure 1) susceptible d'être appliqué entre les pièces selon leur fibre neutre et une contrainte de flexion $\sigma_F$ correspondant au moment de flexion $M_F$ (figure 1) susceptible d'être appliqué entre les pièces.

Comme le montre le profil des contraintes illustré dans la partie supérieure de la figure 1, si l'on désigne par $\sigma_G$ et $\sigma_D$ les contraintes supportées par chacun des côtés (respectivement gauche et droite sur la figure) de l'assemblage, la contrainte de traction $\sigma_T$ est égale à

$$\frac{\sigma_G + \sigma_D}{2}$$ et la contrainte de flexion $\sigma_F$ est égale à

$$\frac{\sigma_G - \sigma_D}{2} \cdot .$$

Conformément à l'invention, on détermine par le calcul le rapport R entre la contrainte de traction $\sigma_T$ et la contrainte de flexion $\sigma_F$. Dans la plupart des applications, le rapport R varie entre une valeur minimale Rmin et une valeur maximale.Rmax Dans certains cas, le rapport R peut toutefois avoir une valeur sensiblement constante.

Sur la base du rapport R ainsi déterminé, on fixe la valeur d'un angle α (figure 1) entre une première ligne d'organes de fixation 14 et la direction de la fibre neutre des pièces 10 et 12 à assembler. On utilise à cette fin les courbes de la figure 2, qui représentent respectivement les valeurs maximale $\alpha_{max}$, minimale $\alpha_{min}$ et optimale $\alpha_{opt}$ de l'angle α, en fonction du rapport R.

Lorsque le rapport R est supérieur ou égal à 1, la valeur maximale de l'angle α, qui correspond à la courbe $\alpha_{max}$ sur la figure 2, est donnée par la relation $\alpha_{max}$ = 13,9 ln(R) + 28. Dans les mêmes conditions, la valeur minimale de l'angle α, qui correspond à la courbe $\alpha_{min}$, est donnée par la relation $\alpha_{min}$ = 10,8 ln(R) + 16. Enfin, toujours dans le cas où le rapport R est supérieur ou égal à 1, la valeur optimale de l'angle α, qui correspond à la courbe $\alpha_{opt}$ sur la figure 2, est donnée par la relation $\alpha_{opt}$ = 11,6 ln(R) + 21.

Lorsque le rapport R est inférieur à 1, la valeur optimale de l'angle α est de 20° environ, les valeurs maximale et minimales étant alors de 28° et de 16°, respectivement. Toutes ces valeurs correspondent également à celles qui sont données par les courbes de la figure 2.

Dans le cas le plus général où R varie entre deux valeurs Rmin et Rmax (ces valeurs sont respectivement égales à 5 et à 15 dans l'exemple numérique illustré sur la figure 2) la valeur choisie pour l'angle α doit être telle que $\alpha_{min}$ (Rmax) ≤ α ≤ $\alpha_{max}$(Rmin). Dans la pratique, on choisit une valeur de α située sensiblement au milieu de ces deux bornes, c'est-à-dire que l'on donne à α une valeur sensiblement égale à

$$\frac{\alpha_{min}(R\,max) + \alpha_{max}(R\,min)}{2}.$$

Avantageusement, si le rapport R est à peu près constant, on donne à l'angle α une valeur correspondant sensiblement à celle qui est donnée par la courbe $\alpha_{opt}$ pour cette valeur de R.

Il est à noter que la valeur donnée à l'angle α n'excède jamais 90°. Ainsi, dans le cas extrême où les efforts à transmettre par l'assemblage correspondent à une traction simple, on donne de préférence à l'angle α une valeur égale à 90°, la valeur minimale étant, dans ce cas, de 80°.

Lorsqu'on donne à l'angle α la valeur optimale $\alpha_{opt}$, les lignes extrêmes d'organes de fixation 14 orientées selon cet angle sont disposées d'une manière optimale, telle que les fixations de ces lignes soient iso critiques. Les contraintes supportées par les organes de fixation 14 les plus chargés sont alors minimales. Cette caractéristique permet de donner à la durée de vie en fatigue une valeur optimale. Cette caractéristique optimise aussi la tenue statique. Ces propriétés subsistent tant que la valeur de l'angle α reste comprise dans la fourchette délimitée par les angles $\alpha_{max}$ et $\alpha_{min}$.

L'agencement des rangées extrêmes d'organes de fixation 14 conforme à l'invention s'applique quel que soit le type d'assemblage concerné.

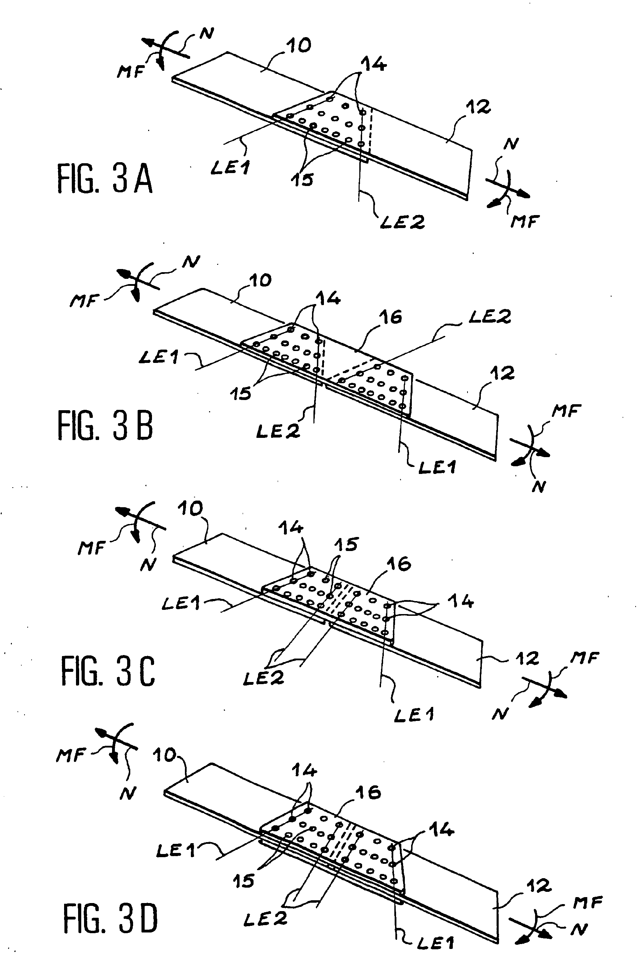

Ainsi, on a représenté sur la figure 3A le cas d'un assemblage simple, dans lequel les deux pièces 10 et 12 à assembler sont fixées directement l'une à l'autre, sans éclisse.,

Les parties terminales, sensiblement planes, des pièces 10 et 12 se recouvrent alors de façon à être assemblées l'une à l'autre par deux lignes extrêmes LE1 et LE2 d'organes de fixation 14. Comme on l'a illustré à titre d'éxemple sur la figure 3A, l'assemblage comprend généralement, de plus, des organes intermédiaires de fixation 15. Dans un tel assemblage, les lignes extrêmes LE1 et LE2 sont orientées selon l'angle α, conformément à l'invention. Par ailleurs, les organes de fixation 14 et 15 sont généralement alignés en un certain nombre de rangées orientées parallèlement à la fibre neutre des pièces 10 et 12. Le nombre et la disposition des organes intermédiaires de fixation 15 sont déterminés selon les règles de l'art.

Sur la figure 3B, on a représenté une première application de l'invention à l'assemblage de deux pièces 10 et 12 par l'intermédiaire d'une éclisse 16.

Dans ce cas, chacune des pièces 10 et 12 est fixée sur l'éclisse 16 par un assemblage comparable à celui qui relie les deux pièces 10 et 12 dans l'application de la figure 3A. En d'autres termes, les pièces 10 et 12 sont placées bout à bout et l'éclisse 16 recouvre la partie terminale de chacune d'entre elles, en étant fixée à cette partie terminale par deux lignes extrêmes LE1 et LE2 d'organes de fixation 14, ainsi que par des organes intermédiaires de fixation 15. Comme dans le cas précédent, le nombre et la disposition des organes intermédiaires de fixation 15 sont déterminés de façon classique selon les règles de l'art.

La figure 3C concerne également l'assemblage de deux pièces 10 et 12 par l'intermédiaire d'une éclisse 16.

Comme dans le cas précédent, l'éclisse 16 est fixée directement à chacune des pièces 10 et 12 par deux lignes extrêmes LE1 et LE2 d'organes de fixation 14 et par des organes intermédiaires de fixation 15 Toutefois, dans ce cas, seules les lignes extrêmes LE1 les plus éloignées de l'autre pièce sont orientées selon l'angle α conforme à l'invention. Au contraire, les lignes extrêmes LE2 les plus proches de l'autre pièce sont orientées selon un angle proche de 90° par rapport à la fibre neutre des deux pièces.

Dans ce cas, l'éclisse 16 doit être épaissie dans la région des lignes LE2, sites critiques d'amorçage des fissures.

Sur la figure 3D, on a représenté le cas où les pièces 10 et 12 sont assemblées par l'intermédiaire de deux éclisses 16, placées de part et d'autre des parties terminales des pièces. Les deux éclisses 16 sont alors reliées séparément à la partie terminale de chacune des deux pièces 10 et 12, lesdites pièces étant disposées bout à bout comme sur les figures 3B et 3C. Comme dans le cas de la figure 3C, le raccordement de l'éclisse sur chacune des pièces est assuré par deux lignes extrêmes LE1, LE2 et par au moins une ligne intermédiaire LI d'organes de fixation 14, et seule la ligne extrême LE1 la plus éloignée de l'autre pièce est orienté selon l'angle α conforme à l'invention.

Dans le cas qui vient d'être décrit en référence à la figure 3D, où les pièces 10 et 12 sont assemblées l'une à l'autre par deux éclisses 16, l'épaisseur de chaque éclisse est sensiblement égale à 0,6 fois l'épaisseur de l'éclisse simple utilisée dans le cas de la figure 3B.

Comme l'illustrent les figures 3A à 3D, les extrémités des pièces 10 et 12 et des éclisses 16, lorsqu'elles existent, sont avantageusement découpées parallèlement aux lignes extrêmes LE1 et LE2 d'organes de fixation 14. Cet agencement permet de limiter la masse des pièces à des valeurs minimales.

Sur les figures 3A à 3D, les parties terminales des pièces 10 et 12, par lesquelles celle - ci sont assemblées, présentent une épaisseur uniforme, qui correspond à l'épaisseur desdites pièces en dehors de la région de l'assemblage. Toutefois, d'autres agencements sont possibles, sans sortir du cadre de l'invention. Ainsi, les parties terminales des pièces 10 et 12 peuvent aussi présenter une épaisseur variable, qui diminue soit régulièrement en biseau, soit par paliers, en allant vers l'extrémité de la pièce correspondante.

Comme l'illustre schématiquement la figure 4 et comme on l'a mentionné précédemment, l'invention s'applique aussi au cas où les efforts qui doivent être transmis par l'assemblage sont des effors alternés, c'est-à-dire des efforts orientés alternativement dans un sens, puis dans l'autre. Ces efforts alternés peuvent notamment être des efforts de flexion et/ou des efforts de traction. Dans ce cas, la ligne extrême formée par les organes de fixation 14 est orientée selon l'angle $\alpha$ d'un côté de la fibre neutre des pièces 10 et 12 et selon un angle -$\alpha$ de l'autre côté de ladite fibre neutre.

Bien entendu, l'invention n'est pas limitée aux modes de réalisation qui viennent d'être décrits. Ainsi, elle peut s'appliquer à des pièces réalisées en des matériaux identiques ou différents, métalliques ou en matériaux composites. Elle peut également s'appliquer aussi bien à des pièces sensiblement planes qu'à des pièces profilées, assemblées par leurs âmes sensiblement planes.

### Revendications

1. Procédé d'assemblage de deux pièces (10, 12) sensiblement planes au moyen d'au moins une ligne extrême d'organes de fixation (14), destinés à transmettre entre lesdites pièces (10,12) des efforts déterminés, orientés dans le plan des pièces, **caractérisé en ce qu'**il consiste à calculer au moins un rapport R entre les contraintes de traction $\sigma_T$ et de flexion $\sigma_F$ correspondant auxdits efforts et à orienter ladite ligne extrême d'organes de fixation (14) selon un angle $\alpha$ par rapport à la direction de la fibre neutre desdites pièces (10,12), la valeur absolue .dudit angle $\alpha$ étant telle que : $\alpha_{min} < |\alpha| < \alpha_{max}$ avec $\alpha_{min} = 10,8 \ln (R) + 16$ et $\alpha_{max} = 13,9 \ln (R) + 28$ lorsque le rapport R est au moins égal à 1 et avec $\alpha_{min} = 16$ et $\alpha_{max} = 28$ lorsque le rapport R est inférieur à 1, la valeur absolue de l'angle $\alpha$ étant au plus égale à 90°.

2. Procédé selon la revendication 1, dans lequel, lorsque le rapport R varie entre une valeur minimale Rmin et une valeur maximale Rmax, on oriente ladite ligne extrême d'organes de fixation (14) selon un angle $\alpha$ dont la valeur absolue est telle que $\alpha_{min}$ (Rmax) $\leq |\alpha| \leq \alpha_{max}$(Rmin).

3. Procédé selon la revendication 2, dans lequel on donne à la valeur absolue de l'angle $\alpha$ une valeur sensiblement égale à

$$\frac{\alpha_{min}(R\max) + \alpha_{max}(R\min)}{2}.$$

4. Procédé selon la revendication 1, dans lequel, lorsque le rapport R est à peu près constant, on oriente ladite ligne extrême d'organes de fixation (14) selon un angle $\alpha$ sensiblement égal, en valeur absolue, à $\alpha_{opt}$, avec $\alpha_{opt} = 11,6 \ln (R) + 21$ lorsque R est au moins égal à 1 et avec R = 20° lorsque R est inférieur à 1.

5. Procédé selon l'une quelconque des revendications précédentes, dans lequel, les efforts à transmettre étant des efforts alternés, on oriente là ligne extrême d'organes de fixation (14) selon ledit angle $\alpha$ et selon un angle - $\alpha$, de part et d'autre de la fibre neutre des pièces (10,12).

6. Procédé selon l'une quelconque des revendications précédentes, dans lequel les deux pièces (10,12) sont assemblées directement l'une à l'autre par au moins deux lignes extrêmes d'organes de fixation (14) orientées selon ledit angle $\alpha$.

7. Procédé selon l'une quelconque des revendications 1 à 5, dans lequel les deux pièces (10,12) sont assemblées l'une à l'autre par l'intermédiaire d'une éclisse (16), chacune des pièces étant fixée à l'éclisse par au moins deux lignes extrêmes d'organes de fixation (14) orientées selon ledit angle $\alpha$.

8. Procédé selon l'une quelconque des revendications 1 à 5, dans lequel les deux pièces (10,12) sont assemblées l'une à l'autre par l'intermédiaire d'une éclisse (16), chacune des pièces étant fixée à l'éclisse par au moins deux lignes extrêmes d'organes de fixation (14), au moins les lignes extrêmes les plus éloignées de l'autre pièce étant orientées selon ledit angle $\alpha$.

9. Procédé selon l'une quelconque des revendications 1 à 5, dans lequel lesdites pièces (10,12) sont assemblées l'une à l'autre par l'intermédiaire de deux éclisses (16), chacune des pièces étant fixée aux deux éclisses par au moins deux lignes extrêmes d'organes de fixation (14), parmi lesquelles au moins la ligne extrême la plus éloignée de l'autre pièce est orientée selon ledit angle $\alpha$.

10. Procédé selon l'une quelconque des revendications précédentes, dans lequel lesdites pièces (10,12) présentent une épaisseur sensiblement constante dans la zone de l'assemblage.

11. Procédé selon l'une quelconque des revendications 1 à 9, dans lequel lesdites pièces (10,12) présentent une épaisseur qui diminue en allant vers leurs extrémités, dans la zone de l'assemblage.

### Claims

1. Method for assembling two substantially flat parts (10, 12) by means of at least one end line of fixations (14) intended to transmit determined forces between said parts (10,12) and oriented along the plane of the parts, **characterized in that** it consists of calculating at least one ratio R between the tensile stresses $\sigma_T$ and bending stresses $\sigma_F$ relating to said forces, and of orienting said end line of fixations (14) along an angle $\alpha$ relative to the direction of the neutral fibre of said parts (10, 12), the absolute value of said angle $\alpha$, being such that: $\alpha_{min} < |\alpha| < \alpha_{max}$ where $\alpha_{min} = 10.8 \ln(R) + 16$ and $\alpha_{max} = 13.9 \ln(R) + 28$ when the ratio R is 1 or more, and in which $\alpha_{min} = 16$ and $\alpha_{max} = 28$ when the ratio R is less than 1, the absolute value of angle $\alpha$ being no more than 90°C.

2. Method according to claim 1, in which when the ratio R varies between a minimal value Rmin and a maximum value Rmax, said end line of fixations (14) is oriented along an angle $\alpha$ whose absolute value is such that $\alpha_{min}$ (Rmax) $\leq |\alpha| \leq \alpha_{max}$ (Rmin).

3. Method according to claim 2, in which the absolute value of angle $\alpha$ is given a value substantially equal

$$\text{to } \frac{\alpha_{min}(R \max) + \alpha_{max}(R \min)}{2}.$$

4. Method according to claim 1 in which, when the ratio R is more or less constant, said end line of fixations (14) is oriented along an angle $\alpha$ substantially equal, in absolute value, to $\alpha_{opt}$ in which $\alpha_{opt} = 11.6 \ln(R) + 21$ when R is 1 or more and with R = 20° when R is less than 1.

5. Method according to any of the preceding claims, in which the forces to be transmitted being alternate forces, the end line of fixations (14) is oriented along said angle $\alpha$ and along an angle $-\alpha$ either side of the neutral fibre of parts (10, 12).

6. Method according to any of the preceding claims in which the two parts (10, 12) are assembled directly one to the other by at least two end lines of fixations (14) oriented along said angle $\alpha$.

7. Method according to any of claims 1 to 5, in which the two parts (10, 12) are assembled one to the other via a fishplate (16), each of the parts being fixed to the fishplate by at least two end lines of fixations (14) oriented along said angle $\alpha$.

8. Method according to any of claims 1 to 5, in which the two parts (10, 12) are assembled one to the other via a fishplate (16), each of the parts being fixed to the fishplate by at least two end lines of fixations (14), at least the end lines the most distant from the other part being oriented along said angle $\alpha$.

9. Method according to any of claims 1 to 5, in which said parts (10, 12) are assembled one to the other via two fishplates (16), each of the parts being fixed to the two fishplates by at least two end lines of fixations (14), among which at least the end line the most distant from the other part is oriented along said angle $\alpha$.

10. Method according to any of the preceding claims, in which the thickness of said parts (10, 12) is substantially constant in the assembly zone.

11. Method according to any of claims 1 to 9, in which the thickness of said parts (10, 12) decreases towards their ends, in the assembly zone.

**Patentansprüche**

1. Verfahren zur Montage zweier im wesentlichen planer Teile (10,12) mittels mindestens einer Extremlinie von Befestigungselementen (14), die dazu vorgesehen sind, zwischen den Teilen (10,12) bestimmte, in der Ebene dieser Teile ausgerichtete Kräfte zu übertragen, **dadurch gekennzeichnet, dass** es darin besteht, mindestens ein Verhältnis R zwischen den Zugbeanspruchungen $\sigma_T$ und Biegebeanspruchungen $\sigma_F$ zu berechnen, welches den besagten Kräften entspricht, und die Extremlinie von Befestigungselementen 14 unter einem Winkel $\alpha$ in Bezug auf die Richtung der Neutralfaser der Teile (10,12) auszurichten, wobei der Absolutwert des Winkels $\alpha$ derart ist, dass: $\alpha_{min} < |\alpha| < \alpha_{max}$, wobei $\alpha_{min} = 10,8 \ln(R) + 16$, und $\alpha_{max} = 13,9 \ln(R) + 28$ ist, wenn das Verhältnis R zumindest = 1 ist, und wobei $\alpha_{min} = 16$ und $\alpha_{max} = 28$ ist, wenn das Verhältnis R kleiner als 1 ist, wobei der Absolutwert des Winkels $\alpha$ höchstens gleich 90° ist.

2. Verfahren nach Anspruch 1, wobei, wenn das Verhältnis R zwischen einem Minimalwert Rmin und einem Maximalwert Rmax variiert, die Extremlinie von Befestigungsorganen (14) unter einem Winkel $\alpha$ ausgerichtet wird, dessen Absolutwert derart ist, dass $\alpha_{min}$ (Rmax) $\leq |\alpha| \leq \alpha_{max}$ (Rmin) ist.

3. Verfahren nach Anspruch 2, wobei, wenn dem Absolutwert des Winkels $\alpha$ ein Wert gegeben wird, der im wesentlichen gleich

$$\frac{\alpha \min (R \max) + \alpha \max (R \min)}{2}$$

ist.

4. Verfahren nach Anspruch 1, wobei, wenn das Verhältnis R annähernd konstant ist, die Extremlinie der Befestigungsorgane (14) unter einem Winkel $\alpha$ ausgerichtet wird, die im Absolutwert im wesentlichen gleich $\alpha_{opt}$ ist, wobei $\alpha_{opt} = 11,6 \ln(R) + 21$ ist, wenn R mindestens gleich 1 ist, und wobei R = 20° ist, wenn R kleiner als 1 ist.

5. Verfahren nach einem der vorangehenden Ansprüche, wobei, da die zu übertragenden Kräfte alternierende Kräfte sind, die Extremlinie der Befestigungselemente (14) unter dem Winkel α und unter einem Winkel -α auf beiden Seiten der Neutralfaser der Teile (10,12) ausgerichtet wird.

6. Verfahren nach einem der vorangehenden Ansprüche, wobei die beiden Teile (10,12) durch mindestens zwei Extremlinien von Befestigungsorganen (14), die unter dem Winkel α ausgerichtet sind, zusammengebaut werden.

7. Verfahren nach einem der Ansprüche 1 bis 5, wobei die beiden Teile (10,12) mittels einer Schiene (16) zusammengebaut werden, und jedes der Teile an der Schiene durch mindestens zwei unter dem Winkel α ausgerichtete Extremlinien von Befestigungselementen (14) befestigt wird.

8. Verfahren nach einem der Ansprüche 1 bis 5, wobei die beiden Teile (10,12) mittels einer Schiene (16) zusammengebaut werden, wobei jedes der Teile an der Schiene durch mindestens zwei Extremlinien von Befestigungselementen (14) befestigt wird und mindestens die am weitesten entfernten Extremlinien des anderen Teils unter dem Winkel α ausgerichtet werden.

9. Verfahren nach einem der Ansprüche 1 bis 5, wobei die Teile (10,12) mittels zwei Schienen (16) zusammengebaut werden, wobei jedes der Teile an den zwei Schienen durch mindestens zwei Befestigungselement-Extremlinien (14) befestigt werden, unter denen mindestens die am weitesten vom anderen Teil entfernte Extremlinie unter dem Winkel α ausgerichtet ist.

10. Verfahren nach einem der vorangehenden Ansprüche, wobei die Teile (10,12) eine im wesentlichen konstante Dicke in der Montagezone aufweisen.

11. Verfahren nach einem der Ansprüche 1 bis 9, wobei die Teile (10,12) eine Dicke aufweisen, die zu ihren Enden hin in der Montagezone abnimmt.

FIG. 1

FIG. 2

FIG. 3 A

FIG. 3 B

FIG. 3 C

FIG. 3 D

FIG. 4